# EUROPEAN PATENT APPLICATION

(11) **EP 2 020 308 A1**
(43) Date of publication of application: **04.02.2009**
(21) Application number: 08251986.9
(22) Date of filing: 07.06.2008
(51) Int. Cl.: B60B 9/26, B60B 33/00, B62B 7/00, B60B 9/12

(54) **Stroller wheel with modular suspension**

(30) Priority: 31.07.2007 US 831616
(71) Applicant: GRACO CHILDREN'S PRODUCTS INC., Exton, PA 19341 (US)
(72) Inventor: Ahnert, Stephen, Philadelphia, PA 19104 (US)
(74) Representative: Lawrence, John

(57) **Abstract**

A stroller wheel (20; 80; 100; 120; 130) has a wheel rim (32; 86; 106; 126; 136), a wheel hub (30; 84; 104; 124; 134), and a suspension system (34; 82; 102; 122; 132) integrated between the wheel rim and the wheel hub. The integrated or modular suspension system permits resilient movement of the wheel hub (30; 84; 104) and the wheel rim (32; 86; 106) relative to one another during normal stroller usage. A stroller (24) can include a stroller frame (22) and one or more of the suspended wheels (20; 80; 100; 120; 130) coupled to the stroller frame for rotation about an axis.

## Description

### Background of the Invention

### 1. Field of the Disclosure

The present disclosure is generally directed to strollers, and more particularly to a stroller wheel construction with an integrated or modular suspension system.

### 2. Description of Related Art

Strollers are known in the art to employ various types of wheel suspension mechanisms. Such strollers typically employ a suspension system that is integrated into the frame or as part of a wheel-to-frame swivel joint. These suspension systems make it difficult to add or subtract suspension elements to a particular stroller or line of strollers without performing major design modifications to the stroller frame and/or the swivel joint structure.

The vast majority of stroller suspension systems are of the swing arm variety. These types of systems utilize a coil spring and, very often, a telescoping tube arrangement that is coupled to a swing arm on a frame part or on a swivel joint. The suspension system imparts up and down pivotal movement of the swing arm or arms to which the wheel or wheels are attached. The wheel suspension is achieved by this motion being biased against the spring or other biasing element. In the stroller industry, the vast majority of strollers that employ a suspension system utilize one of many different permutations of this basic swing arm/spring design. There are very few stroller wheel suspension designs that employ suspension concepts other than a variation of the swing arm/spring system. These other systems are more elaborate and also require specific frame structure design characteristics in order to be mounted on the stroller.

The known swing arm and other suspension systems have a number of disadvantages. First, the suspension systems that are currently used must be integrated into the stroller frame or a swivel joint assembly positioned between the frame and the wheels. These structural requirements and components make it extremely difficult to add, remove, or modify a suspension system relative to a given stroller frame construction. Modification can require extensive changes to other parts of the stroller including the frame, swivel joint components, axles, struts, and the like. It is typically not feasible to add a suspension system to an existing stroller that was not designed to include any type of suspension. This is because of the magnitude of tooling changes required. Adding suspension geometry may adversely affect other aspects of an existing stroller, such as the frame or fold geometry in a collapsible stroller. This can force a designer to compromise between the suspension and other elements and features of the existing stroller.

Another disadvantage is that the range of travel of a conventional suspension system is limited by the length of the swing arm. Increasing suspension travel can require increasing the length of the swing arm. Increased swing arm length can adversely affect frame geometry, material usage, design and performance characteristics, and part cost. With regard to features of a stroller that are sensitive to part design and geometry, such as the front swivel assemblies often used on the strollers front wheels, optimal steering geometry is often at odds with optimal suspension geometry.

An additional disadvantage of a swing arm-type suspension system is that these have a fixed direction of suspension travel. Generally, the geometry of the suspension allows the wheel to travel upward and, in some instances, slightly rearward when an obstacle is encountered. The suspension travel is typically either linear in nature or limited to a fixed travel path, and also limited to a single travel direction. While this type of suspension system may be suitable for traveling over small obstacles, it may not provide sufficient cushion or damping during frontal impact with, or while running over, larger obstacles such as a curb or a step. In such instances, optimal suspension travel may be more rearward than upward, more forward than upward, or even entirely or directly rearward or forward. A swing arm system may offer little or no suspension function or benefit during use of a stroller in many instances.

Another disadvantage is that in front dual-wheel swivel assemblies or in solid rear stroller axle applications, a swing arm-type suspension system typically does not allow the wheels to move independently of one another. The suspension motion of both front wheels on a common front swivel joint application is typically locked together. The two front wheels may not experience the same obstacle or degree of impact at any one time, and yet the suspension system is typically configured in a manner that moves or deflects both front wheels identically. Similarly, in a solid rear stroller axle application, both rear wheels are typically not suspended at all. This can cause a relatively rough ride if the rear wheels contact obstacles, and particularly when such impact is different at each wheel at any given moment. If suspended, the rear solid axle results in both rear wheels being required to travel or deflect identically.

From an aesthetic stand point, it is often difficult for a consumer to see a stroller wheel suspension system. The system components are typically concealed behind or between the front strollers wheels and are sometimes covered with a decorative housing. Stroller manufacturers often resort to on-board "advertising" techniques to inform consumers of the benefits of a particular suspension system. Some stroller manufactures employ a non-functional rubber boot over the suspension components in order to "advertise" the existence of the suspension system or to make it stand out and thus notify a consumer that the stroller has wheel suspension. These rubber boots add unnecessary expense and complexity to a stroller design while achieving no suspension or other functional benefit. Also, it can be difficult for a user to detect wheel suspension action in a stroller because of the relatively limited range of travel of a conventional swing arm-type suspension system.

### Brief Description of the Drawings

Objects, features, and advantages of the present invention will become apparent upon reading the following description in conjunction with the drawing figures, in which:

FIG. 1 shows a perspective view of part of a stroller including one example of a stroller wheel with a modular or wheel integrated suspension system constructed in accordance with the teachings of the present invention.

FIG. 2 shows a front view of the stroller part and the wheel shown in FIG. 1.

FIG. 3 shows a side view of the stroller wheel shown in FIG. 1.

FIG. 4 shows a fragmentary cross-section taken along line IV-IV of the stroller wheel shown in FIG. 2.

FIG. 5 shows a side view of a portion of a stroller with front and rear wheels having integrated suspension as shown in FIG. 1 and further shows the front wheel in a deflected condition and the rear wheel in a static, normal, or "home" condition.

FIG. 6 shows a side view similar to FIG. 3 of an alternative stroller wheel construction.

FIG. 7 shows a side view of another example of a stroller wheel with a modular or wheel integrated suspension system constructed in accordance with the teachings of the present invention.

FIG. 8 shows a side view of the stroller wheel shown in FIG. 7 and in a deflected condition.

FIG. 9 shows a side view of yet another example of a stroller wheel with a modular or wheel integrated suspension system constructed in accordance with the teachings of the present invention.

FIG. 10 shows a side view of the stroller wheel shown in FIG. 9 and in a deflected condition.

FIG. 11 shows a side view of another example of a stroller wheel constructed in accordance with the teachings of the present invention.

FIG. 12 shows a side view of the stroller wheel shown in FIG. 11 and in a deflected condition.

FIGS. 13 and 14 show side views of two additional alternative examples of stroller wheels constructed in accordance with the teachings of the present invention.

### Detailed Description of the Disclosure

The stroller wheel examples disclosed herein solve or improve upon one or more of the above-noted and other problems and disadvantages with known stroller suspension mechanisms and systems. In one example, the disclosed stroller wheel eliminates the need for a swing arm-type suspension system that is common on many strollers. In another example, the disclosed stroller wheels have a resilient structure integrated into the wheel that creates the suspension function. The disclosed stroller wheels can be mounted on strollers that have not been configured to accept a stroller wheel suspension system without having to modify the existing stroller configuration and construction. No part on an existing stroller frame or on the disclosed wheel structures need be assembled, disassembled, modified, or otherwise altered in order to add wheel suspension characteristics to a stroller. The disclosed wheels need only be swapped for existing stroller wheels to add wheel suspension. In a further example, the disclosed stroller wheels are less susceptible to contaminants affecting their overall performance. In yet another example, the disclosed stroller wheels can be designed to achieve any number of various aesthetic configurations. The disclosed wheels can be configured to mask or hide the existence or presence of the suspension system. The disclosed wheels can also be designed to enhance the overall appearance of the stroller without affecting suspension performance and/or to make readily apparent the existence of the modular stroller suspension incorporated into the wheel design.

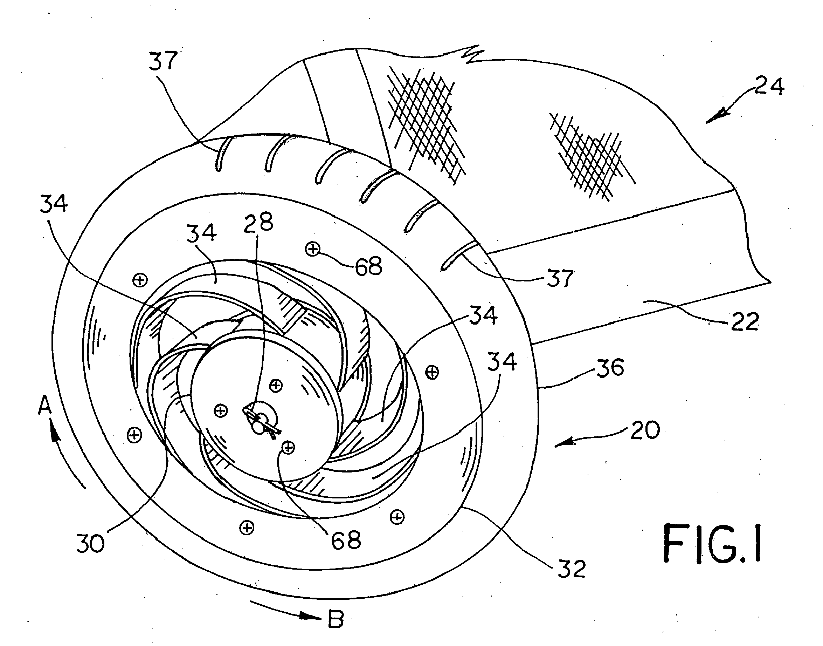

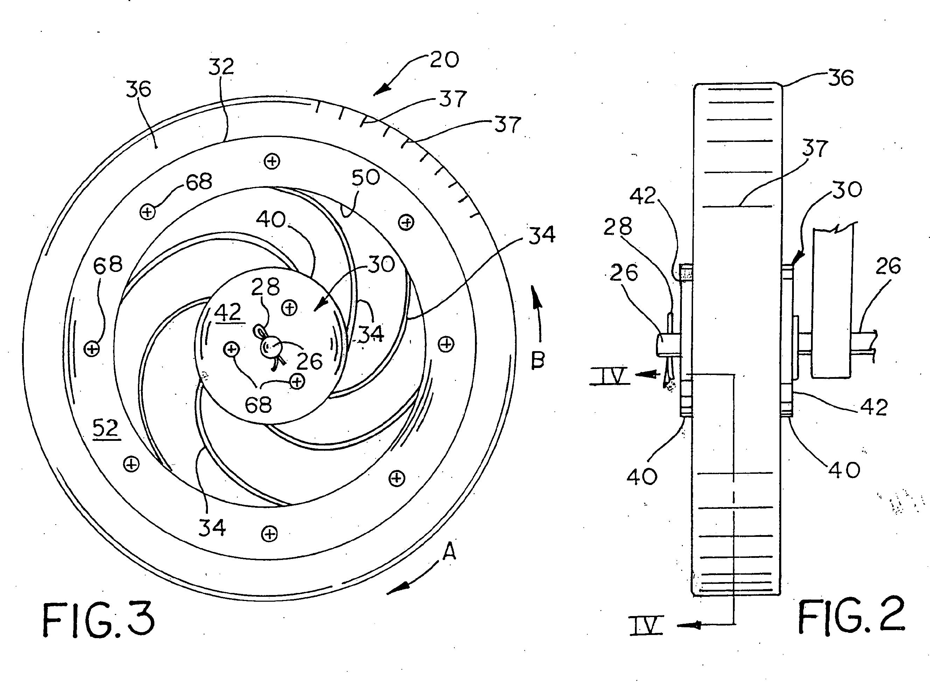

Turning now to the drawings, FIG. 1 illustrates a perspective view of one example of a stroller wheel 20 with a modular or integrated suspension feature constructed in accordance with the teachings of the present invention. The stroller wheel 20 is attached to a solid frame part 22 of a stroller 24. The stroller wheel 20 can be mounted to the frame part 22 for rotation about a wheel axis or rolling axis W in any suitable manner. In one example as shown in FIG. 2, a solid axle 26 can be carried on the frame part 22 and the wheel 20 can be mounted for rotation on the solid axle in a conventional manner. The wheel 20 can be retained on the axle in any suitable manner, such as by use of a cross-bore and a cotter pin 28 on the end of the axle 26 as shown in FIG. 1, or by use of a C-ring and slot arrangement or the like. In another example, an axle (not shown) can be carried on a part of the wheel 20 and rotatably coupled to the frame part 22. The wheel mounting can vary considerably and yet fall within the spirit and scope of the present invention. However, the disclosed stroller wheels permit a simple, fixed mounting arrangement to the stroller frame part 22 and permit a simple construction for the frame part.

The wheel 20 is shown in side view in FIG. 2. As shown in FIGS. 1-3, the disclosed wheel 20 has a wheel hub 30 in the form of a cylindrical slug. The wheel also has a wheel rim 32 formed as a continuous annular ring. A plurality of spokes 34 extend generally radially between and interconnect the hub 30 and the rim 32. In this example, a tire 36 is carried on the exterior perimeter of the rim 32 as is known in the art. The disclosed tire 36 generally has a road contact surface 37 around its periphery and has opposed side walls 38. The tire 36 shown in the disclosed example is just one of many possible examples of a tire suitable for use in conjunction with the disclosed wheels. The tire 36 can be formed of a rubber, plastic, thermoplastic elastomer, or other suitable material. The tire can be solid or can be inflatable. The tire can also be a separate component attached to the rim. Alternatively, the tire can be integrally molded as part of the rim from the rim material, or can be insert molded or dual molded from a different material but as an integral part of the rim. The shape, size, tread, and the like of the tire 36 can also vary from the examples shown and described herein. The construction of the tire 36 can vary considerably and yet fall within the spirit and scope of the present invention.

In the disclosed example, the hub 30 has a perimeter circumferential surface 40 that faces radially outward. The hub 30 also has a pair of end faces 42 that define the opposed ends of the hub slug shape. The hub 30 defines the wheel axis W extending axially between the end faces 42 and is centered relative to the surface 40. As noted above, the wheel 20 is configured to rotate about the wheel axis W and the hub is configured to mount relative to an axle for rotation about the axis W. The structure of the hub 30 can also vary from the slug shape as shown. The hub can include radial ribs and recesses in the end faces 42 in one example. The surface 40 need not be a smooth surface in another example. The hub 30 can vary within the spirit and scope of the present invention.

The rim 32 is formed as a continuous annular ring that is centered about the wheel axis W. In the disclosed example, the rim 32 surrounds the hub 30 and is positioned directly radially outward relative to the hub surface 40, lying generally coplanar with the hub. In an optional example, the rim and hub can lie in offset planes relative to one another along the rotation axis W. In such an example, the rim and hub can rotate about the same axis W but lie out of plane with one another. In this example, the rim 32 has an inner circumferential surface 50 that faces radially inward toward the hub perimeter surface 40. The rim 32 also has an outer circumferential surface (not shown) to which the tire 36 is mounted. The rim 32 also has opposed outward facing side surfaces 52. The structure of the rim 32 can also vary from that shown. The rim need not be a circular ring or need not be continuous. Instead, the rim could have separate sections supporting a tire in one example. The sides 52 can vary from the smooth surfaces in another example. The rim 32 can vary within the spirit and scope of the present invention.

In the disclosed example, the hub 30 and rim 32 can be formed of virtually any suitable material. However, it is preferable that the rim and hub each be substantially rigid, strong, and durable to perform their intended functions. The hub 30 mounts the wheel 20 to the stroller and should be sturdy to endure loads encountered during normal stroller usage. The hub 30 should also be substantially rigid so as to provide a fixed attachment of the wheel 20 to the stroller frame parts 22 and to minimize play at the axle to stroller frame part connection. Similarly, the rim 32 in this example should also be sturdy and strong to retain a round and smooth rolling shape and to withstand applied loads and impacts during normal stroller usage. The materials for the hub 30 and rim 32 can include, but are certainly not limited to, steel, aluminum, other metal alloys, plastic, thermoplastic, composites, wood, carbon fiber, and the like. The material and/or the shape and structure of the rim and hub components can be selected and designed so that the rim and hub are substantially rigid so that the wheels roll true and round during normal use.

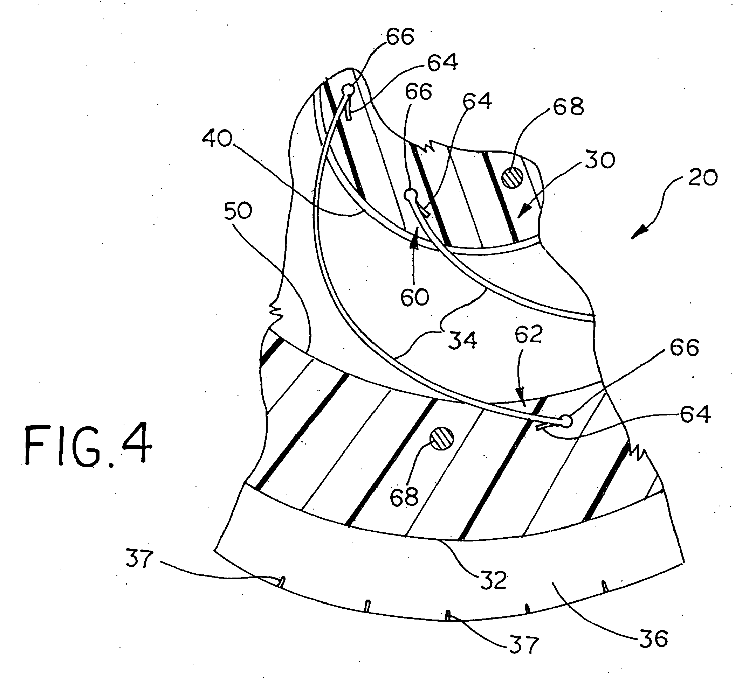

A plurality of the spokes 34 are provided on the disclosed wheel 20. Each of the spokes 34 is coupled to the hub at an inner end 60 and is coupled to the rim 32 at an outer end 62. In this particular example, the spokes 34 are equally spaced apart from one another circumferentially around the wheel 20. Each spoke 34 is also curved in a circumferential direction such that the attachment point of the inner end 60 to the hub 30 is circumferentially or angularly offset relative to the attachment point of the outer end 62 to the rim 32. As shown in FIG. 4, the spokes 34 in this example are separate components from the rim and hub. As will become evident to those having ordinary skill in the art upon reading this disclosure, the spokes 34 can vary in material and in construction from the example shown in FIG. 4.

The spokes 34 can be formed from a material that is either different from or the same as the rim and hub material, as desired. The spokes 34 can alternatively be formed as an integral part of the rim and/or hub if desired. The shape, thickness, width, length, and/or material selection for the spokes 34 can be altered separately or in combination with one another to create the desired flex, deformation, and/or resiliency in the spokes. In any instance, the spokes 34 are intended to be formed as a resilient and flexible or non-rigid structure in comparison to the hub and rim. Each spoke should be formed having a desired unloaded natural or static shape and a desired in-use shape when installed on the wheel 20. The in-use or installed shape may or may not be the same as the static or natural shape. The spokes 34 should be capable of bending, stretching, compressing, twisting, and/or otherwise deforming upon application of a load in the assembled wheel 20. Each spoke 34 should also be resilient so as to return to a "home" or at-rest shape upon release of the applied load on the assembled wheel 20.

In this disclosed example, the spokes 34 are formed from a spring steel strip material and have a generally thin, flat, and wide blade-like body shape. The spokes 34 are identical to one another in this example as to their size and shape in order that the spokes 34 each produce the same consistent spring characteristics. This will result in consistent suspension effect or performance regardless of the wheel rotational position. In this example, a portion of the inner ends 60 of the spokes are embedded in the surface 40 of the hub 30 and into the hub material as shown in FIG. 4. In one example, the spokes 34 can be insert-molded during formation of the hub, the rim, or both. In order to retain the inner ends 60 of the spokes 34 embedded in the hub 30, the end portion can be formed having one or more retention mechanisms that become securely and mechanically lodged in or interlocked with the hub material during the molding process. In this example, each inner end 60 has one or more barbs or tangs 64 projecting from a surface on the end portion of the spoke 34. The barbs or tangs 64 can be formed projecting in a direction toward the outer end 60. This will inhibit the inner ends from being pulled from the hub 30. Pulling a spoke 34 away from the hub 30 will cause the barb or tang 64 to be forced further outward from the spoke and to bury further into the hub material.

In another example, the end portion of the inner ends 60 can be formed having one or more holes (not shown) through the spoke material. Alternatively or in addition, each end 60 can include an enlarged or thickened edge 66 to further assist in preventing the spokes from pulling out of the hub material. During an insert molding process, the hub material will flow through the holes and create a mechanical interlock between the inner end 60 of the spoke 34 and the hub 30 material. In another example, the hub 30 can be formed having a plurality of slots into the surface 40. The spokes 34 can be formed having one or more of the one-way barbs or tangs 64 as shown. The spokes 34 can be forcibly installed in the slots after formation of the hub 30. The barbs or tangs 64 can inhibit the spokes from being withdrawn from the slots after the spokes 34 are installed.

The outer ends 62 of the spokes can have end portions that are attached or connected to the rim 32 in the same or a different process used to attach the spokes 34 to the hub 30. The spokes 34 can be insert molded to both the hub 30 and rim 32 during a simultaneous process to fabricate both rim and hub. Alternatively, the spokes 34 can be placed in a first mold and attached to the rim 32 during a two step process. Either the rim 32 or the hub 30 can first be fabricated with the spokes attached, and then that assembly can be inserted into a second mold to form the other of the rim and hub connected to the spokes.

In yet another example, the rim, hub, or both can be formed in two or more parts that are assembled width-wise to capture the spokes between parts. In such an example, slots can be pre-formed in both sides of the rim, hub, or both. The edges of the appropriate end or ends of the spokes can be inserted laterally into the slots in one of the halves and then the other half can be slipped over the exposed edges of the spokes. Fasteners 68, as represented in FIG. 1, can be used to laterally or width-wise secure the two or more parts together while capturing the spokes between the parts. Use of barbs, thickened ends or other features on the slots, spoke ends, or both can be employed to assist in retaining the spokes within the slots once the wheel is assembled.

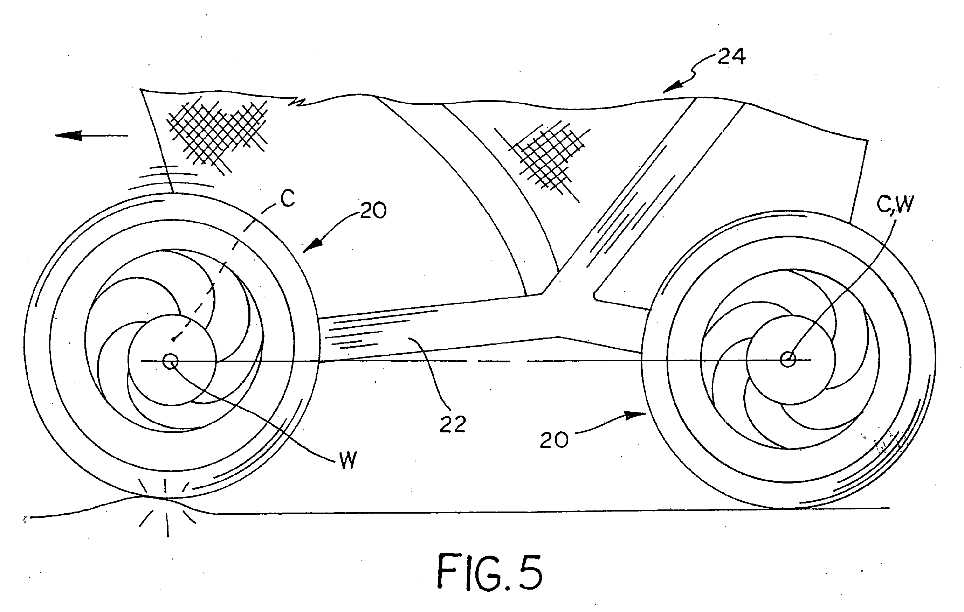

In the disclosed example, the spokes 34 are configured to retain the hub 30 centered on the rotation axis W, which can be termed a home or at rest position. Upon application of a load or impact to the tire 36, such as the tread surface 37, the spokes 34 can resiliently deflect as shown in FIG. 5. This moves the hub from the home position, where the hub rotation axis W is aligned with a rim center axis C, to a position where the rotation axis W is offset relative to the rim axis C. However, because the hub 30 defines the point of rotation for the wheel 20, the wheel will still roll or rotate about the axle connection to the hub, and thus about the axis W. Thus, the rim 32 and tire 36 are offset from the true rotation axis W. The deflection of the spokes 34 absorbs at least a portion of the impact load or force to dampen the effect of the load perceived by an occupant of the stroller. The resiliency of the spoke material will return the hub 30 to the home position upon removal of the load.

Depending upon the flex, curvature, and resiliency characteristics of the spokes 34, as well as the weight of the stroller 24 and any stroller occupant(s), the hub 30 may always operate with the wheel rotation axis W offset slightly downward relative to the wheel or rim center axis C as the wheel 20 rolls during use. As the wheel 20 rolls, the spokes 34 may flex and bend accordingly to maintain a consistent relationship between rim and hub, but which in effect may be a fluid, dynamic relative positioning between hub and rim. The relative movement of the hub 30 and rim 32 create the suspension function. The flex, curvature, and resiliency of the spokes can be selected and designed to determine the degree of damping, bounce, and the like of the system. Material selection, and thus the material properties, and the spoke dimensional characteristics can be altered to achieve different suspension functional parameters.

In addition, the shape and bend in the spokes 34, if any, and the wheel rolling direction may alter, either slightly or more significantly, the suspension functional parameters of the wheel 20. In the disclosed example, the spokes 34 are curved in a circumferential direction around the wheel 20. Thus, in one direction indicated by the arrow A in FIG. 1, the wheel 20 will roll against the "grain" or against the curvature direction of the spokes 34. In this direction, the spokes 34 may offer a first suspension function or capability. In another direction indicated by the arrow B in FIG. 1, the wheel 20 will roll with the "grain" or curvature of the spokes 34. Depending upon the various material and geometric characteristics of the spokes, the effect of wheel rolling direction may be non-existent, minimal, or relatively significant. In one example, the wheels 20 can be designed so that it does not matter to a user, during ordinary stroller use, which direction the wheels roll. Thus, all the wheels can be fabricated identically and mounted on either side of a stroller without effecting suspension system performance. In another example, rolling direction may affect suspension performance such that the wheels 20 can be designed for a specific stroller side. One wheel design can be configured for a right side of the stroller and another wheel design can be configured for a left side of the stroller to compensate for differences in rolling direction. In yet another example, the wheels can be constructed having mirror image wheel mounts on either side of the wheels 20. This can permit the wheels to be mounted on either side of the stroller and for rolling in either direction, as needed. In such an example, only a single stroller wheel configuration need be fabricated.

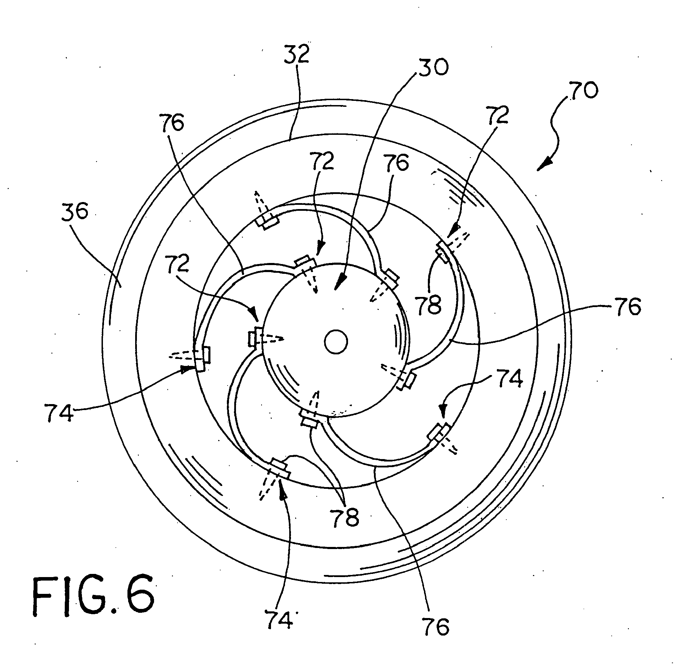

FIG. 6 illustrates one alternative example of a stroller wheel 70 that utilizes a different spoke coupling arrangement within the spirit and scope of the present invention. In this example, the ends 72 and 74 of each spoke 76 are fastened to the hub surface 40 and the rim surface 50, respectively. In one example, threaded fasteners 78 can be utilized to install the spokes 76 on the hub 30 and on the rim 32. In another example, rivets or other suitable fasteners can be utilized. In a further example, one end 72 or 74 of each spoke 76 can be fastened to the respective hub 30 or rim 32 and the other end of each spoke 76 can be embedded in the other of the rim or hub in a manner as described previously. The attachment means and process for interconnecting the rim and hub with the spokes can vary within the spirit and scope of the present invention.

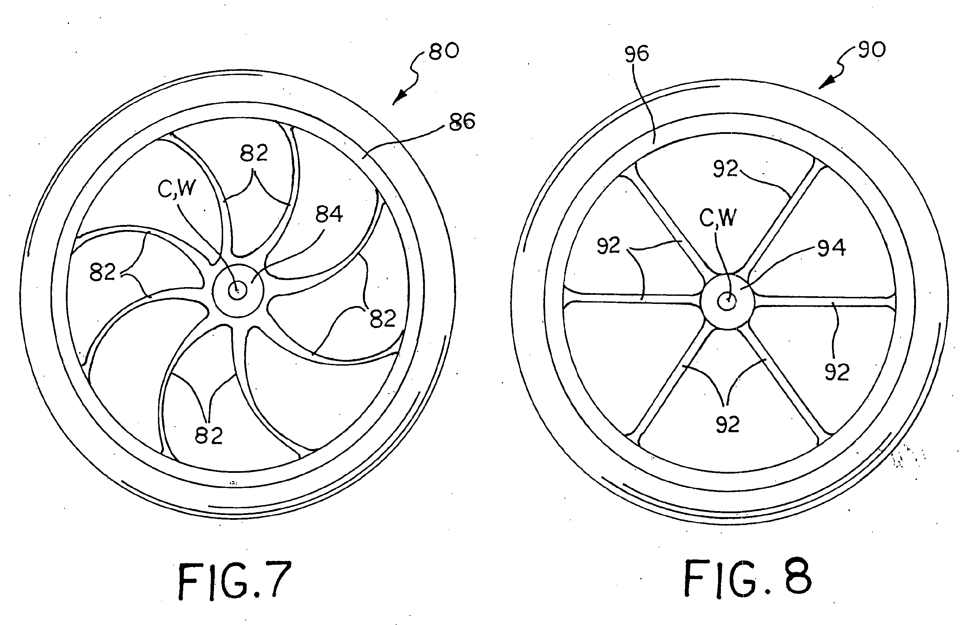

FIGS. 7 and 8 illustrate another example of a stroller wheel 80 constructed in accordance with the teachings of the present invention. In this example, the wheel 80 is substantially similar to the wheel 20 described previously. However, in this example, the spokes 82 are formed integrally formed as a unitary part of a wheel hub 84 and a wheel rim 86. The spokes 82 in this example can be formed using one material and the rim and hub can be formed using a different material. The unitary structure can be created using a dual-molding process wherein the spokes 82 and/or the rim 86 and hub 84 are molded in a first mold using a first molding process. The first created parts can then be placed in a second mold and molecularly bonded with material shot into the second mold that forms the other parts. It is also possible to mold the parts simultaneously by injection two different materials into one mold at the same time. Using this method, the spoke material can be formed integral with and molecularly bonded to the rim and hub and yet have a different material and thus different performance characteristics. In an alternative example, the material of the spokes 82, hub 84, and rim 86 can be identical. In such an example, only the geometry and other dimensional characteristics of the spokes 82 can be designed to produce the appropriate flex and resilience characteristics during use. As shown in FIG. 8, the spokes 82 can flex during use, resulting in the hub 84 moving from its home position, as in the prior example, to create the suspension functionality.

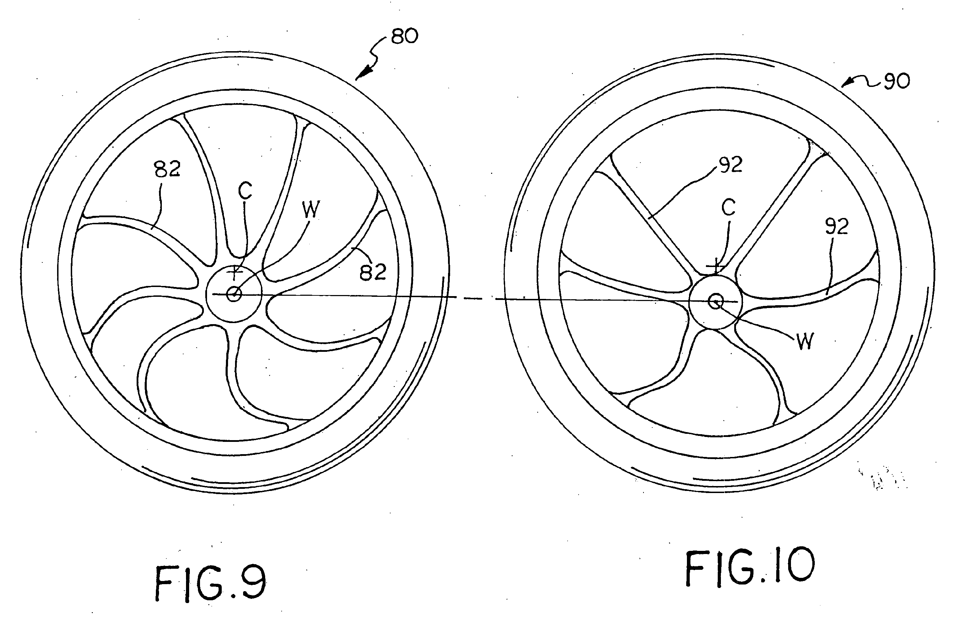

FIGS. 9 and 10 illustrate another example of a stroller wheel 90 constructed in accordance with the teachings of the present invention. In this example, the wheel can be fabricated similar to the wheel 80 as described above. However, in this example the spokes 92 of the wheel 90 are linear elements and are not curved circumferentially around the wheel. As shown in FIG. 10, the resiliency of the suspension lies in the ability of the linear spokes 92 to lengthen via elasticity of the spoke material or to shorten via bending or flexing as needed. The deformation of the linear spokes 92 permits the hub 94 to move from the home position relative to the rim 96 in such an example.

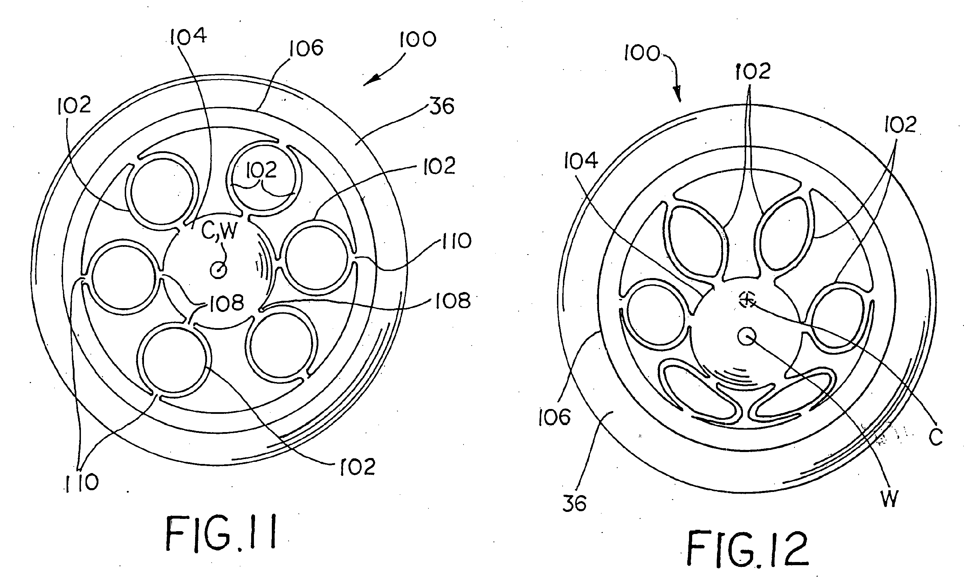

FIGS. 11 and 12 illustrate yet another example of a stroller wheel 100 constructed in accordance with the teachings of the present invention. In this example, each of the spokes 102 has a loop or ring shape. Each ring shape defines a spoke 102. As shown in FIG. 12, each spoke 102 can have a round "home" shape or can be a non-round annular shape. When the wheel 100 is subjected to a load or force during use, the ring shape of each spoke 102 will be altered as needed by compressing or elongating in one direction. Each of the ring-shaped spokes 102 in this example can also be integrally formed and/or molecularly bonded to the hub 104 and rim 106 of the wheel 100, in a manner as described previously. Alternatively, an inner side or end 108 of each spoke 102 can include an end portion (not shown) that is embedded in or otherwise fastened to the hub 104. An outer side or end 110 of each ring shaped spoke 102 can likewise include a portion that is embedded in or otherwise fastened to the rim 106. As will be evident to those having ordinary skill in the art upon reading this disclosure, the spokes can vary in configuration and construction and yet perform as intended according to the invention.

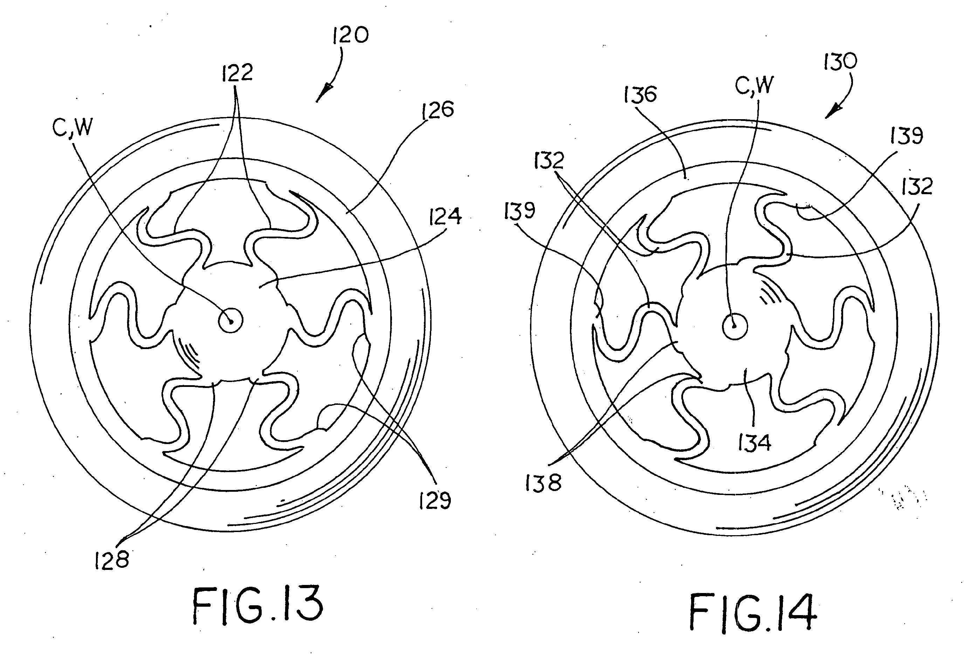

FIGS. 13 and 14 two additional alternate examples of stroller wheels 120 and 130 constructed in accordance with the teachings of the present invention. In this example, each of the spokes 122, 132, respectively, has a non-linear 'S' curved shape. The spokes 122 and 132 for these two wheels 120 and 130 are shown in the "home" shape. Each spoke 122 of the wheel 120 in this example is oriented in an inverted direction relative to the adjacent spokes. The spokes 132 of the wheel 130 are all oriented in the same direction. As will be evident from the descriptions provided above, the spokes 122, 132 will collapse or lengthen as needed during use. Each of the 'S' shaped spokes 122, 132 in these examples can also be integrally formed and/or molecularly bonded to the respective hubs 124, 134 and rims 126, 136 of the wheels 120, 130 in a manner as described previously. Alternatively, an inner side or end 128, 138 of each spoke 122, 132 can include an end portion (not shown) that is embedded in or otherwise fastened to the corresponding hub 124, 134. An outer side or end 129, 139 of each 'S' shaped spoke 122, 132 can likewise include a portion that is embedded in or otherwise fastened to the rims 126, 136. As will be evident to those having ordinary skill in the art upon reading this disclosure, the spokes can vary in configuration and construction and yet perform as intended according to the invention.

Although certain stroller wheels and suspension arrangements have been described herein in accordance with the teachings of the present disclosure, the scope of coverage of this patent is not limited thereto. On the contrary, this patent covers all embodiments of the teachings of the disclosure that fairly fall within the scope of permissible equivalents.

## Claims

1. A stroller wheel comprising:
an annular rim having a center axis and a rim surface extending circumferentially around the rim;
a hub having a rotation axis and a hub surface, wherein the rotation axis is aligned with the rim center axis with the hub at a home position relative to the rim; and
a plurality of spokes each having an outer end coupled the rim surface and an inner end coupled to the hub surface, the plurality of spokes arranged radially spaced apart around the stroller wheel,
wherein each spoke is resiliently flexible permitting the hub to deflect from the home position relative to the rim upon a load applied to the stroller wheel and returning the hub to the home position upon removal of the load.

2. A stroller wheel according to claim 1, wherein the rim surface is positioned facing radially inward toward the hub.

3. A stroller wheel according to claim 1 or claim 2, wherein the hub surface is positioned facing radially outward toward the rim.

4. A stroller wheel according to claim 1 or of claim 2 or claim 3, wherein each spoke is curved, and preferably/optionally wherein the outer end of each curved spoke is coupled to the rim surface at a point that is circumferentially offset from the point at which the respective inner end is coupled to the hub surface.

5. A stroller wheel according to claim 1 or of any of claims 2 to 4, wherein each spoke is formed of a material selected from the group consisting of glass reinforced NYLON, carbon fiber, spring steel, wood, and composite plastic.

6. A stroller wheel according to claim 1 or any of claims 2 to 5, wherein the inner end of each spoke has an inner end portion embedded into the hub surface and the outer end of each spoke has an outer end portion embedded in the rim surface, and wherein each of the inner and outer end portions includes an interlock feature resistant to removal of the inner and outer end portions from the respective hub and rim.

7. A stroller wheel according to claim 1 or any of claims 2 to 6, wherein the hub includes a wheel mount configured to attached the stroller wheel to a stroller frame, and preferably/optionally wherein the wheel mount includes an axle bore that is coaxial with the rotation axis.

8. A stroller wheel according to claim 1 or any of claims 2 to 7, wherein the hub and the rim are formed and coupled to the plurality of spokes during a molding process, and preferably/optionally wherein the hub and the rim are formed from a material that is different from a spoke material and are molecularly bonded to the spokes during a dual molding process.

9. A stroller comprising:
a stroller frame; and
a plurality of wheels coupled to the stroller frame,
wherein at least one of the plurality of wheels is a suspended wheel and has a wheel rim, a wheel hub, and a suspension system integrated between the wheel rim and the wheel hub permitting resilient movement of the wheel hub and the wheel rim relative to one another.

10. A stroller according to claim 9, further comprising:
(i) two or more of the suspended wheels: and/or
(ii) wherein the wheel rim of the at least one suspended wheel is a continuous annular rim with a rim center axis and wherein the wheel hub has a rotation axis, the suspension system comprising:
a plurality of resiliency flexible spokes each having an outer end coupled to a rim surface and an inner end coupled to a hub surface, the plurality of spokes arranged radially spaced apart around the stroller wheel, and the wheel hub suspended by the plurality of spokes within the wheel rim at a home position with the hub rotation axis aligned with the rim center axis.

11. A stroller according to claim 10, wherein each spoke is curved in a circumferential direction around the suspended wheel.

12. A stroller according to claim 10, wherein each spoke includes an elongate spring steel strip.

13. A stroller according to claim 10, wherein the inner end of each spoke has an inner end portion embedded in the wheel hub and the outer end of each spoke has an outer end portion embedded in the wheel rim, and preferably/optionally wherein each of the inner and outer end portions is interlocked with the wheel hub and wheel rim, respectively, to resist removal of the inner and outer end portions.

14. A stroller according to claim 10, wherein each spoke includes a ring shaped body.

15. A stroller according to claim 10, wherein each spoke includes a linear body that is lengthwise deformable.
